# EUROPEAN PATENT APPLICATION

(11) **EP 4 564 270 A1**
(43) Date of publication of application: **04.06.2025**
(21) Application number: 23860607.3
(22) Date of filing: 02.06.2023
(51) Int. Cl.: G06Q 30/02, G06Q 30/06, G06Q 10/02, A45D 44/00, A45D 19/00, G06F 16/9535, G06F 16/9537, G06F 16/9538, G06Q 30/0601

(54) **COSMETICS PROVIDING SYSTEM**

(30) Priority: 01.09.2022 KR 20220110654
(71) Applicant: LG Farouk Co., Seoul 06292 (KR)
(72) Inventor: KIM, Hyung Kyu, Seoul 07795 (KR); JANG, Kyung Sik, Seoul 07795 (KR)
(74) Representative: Vossius & Partner Patentanwälte Rechtsanwälte mbB
(86) International application number: PCT/KR2023/007569
(87) International publication number: WO 2024/048920

(57) **Abstract**

A cosmetics providing system according to an embodiment of the present disclosure may comprise: a mobile terminal that performs a dyeing simulation on the basis of a current color and a target color and outputs a simulation ID corresponding to the performed dyeing simulation; and a dispenser that on the basis of the simulated ID, provides a hair dye for dying hair from the current color to the target color. The mobile terminal may output shop information including at least one shop capable of providing the hair dye corresponding to the simulation ID, and receive an input for selecting a shop from the shop information to receive the hair dye.

## Description

### [Technical Field]

The present disclosure relates to a cosmetics providing system.

### [Background Art]

Recently, with the development of the beauty industry, the types of cosmetics have become very diverse. However, since each user has different skin and hair characteristics, there is a limit to supplying cosmetics that are suitable for each user. Accordingly, dispensers that provide cosmetics that are suitable for each user are being developed.

Cosmetics can include not only those used on the user's skin, such as foundation and sunscreen, but also those used on the user's hair, such as hair dye.

Dispensers can provide these cosmetics to users by manufacturing them according to the preferences and tastes of each user. For example, dispensers can dispense various compositions so that cosmetics that cover the skin or dye the hair are provided in the color desired by the user.

However, since the cosmetics provided by these dispensers change from time to time, problems that are different from the user's expectations or predictions may occur.

Therefore, simulations that predict the results of using cosmetics may be required before cosmetics are provided through the dispenser.

However, after performing such simulations, there is a problem in that it is difficult for the user to immediately receive the cosmetics according to the simulation as desired.

### [Disclosure]

### [Technical Problem]

The purpose of the present disclosure is to provide a cosmetics providing system that can more conveniently provide cosmetics corresponding to simulations to users.

The purpose of the present disclosure is to provide a cosmetics providing system that can manage each simulation performed multiple times by users.

### [Technical Solution]

A cosmetics providing system according to an embodiment of the present disclosure comprises a mobile terminal configured to perform a dyeing simulation according to a current color and a target color and output a simulation ID corresponding to the performed dyeing simulation, and a dispenser configured to provide a dye for dyeing hair from the current color to the target color based on the simulation ID.

The mobile terminal may output shop information including at least one shop capable of providing a dye corresponding to the simulation ID, and receive an input for selecting a shop to receive the dye from the shop information.

The mobile terminal may output a shop list as the shop information, and the shop list is listed in order of time required to provide the dye corresponding to the simulation ID.

The time required to provide the dye may calculated based on at least one of stock status of dyeing materials for providing the dye and reservation status of a shop.

The mobile terminal may output a shop list as the shop information, and the shop list is listed in order of proximity based on location of the mobile terminal.

The mobile terminal may output a shop list as the shop information, and the shop list is listed in order of the number of times a user corresponding to the mobile terminal has used each shop.

The cosmetics providing system may further comprise a server, the mobile terminal is configured to transmit a signal requesting a reservation to a selected shop to the server upon receiving an input for selecting a shop, and the server is configured to receive the signal requesting the reservation.

The server may transmit reservation information to at least one of the dispenser and the mobile terminal used by an expert when receiving the signal requesting the reservation.

The mobile terminal may transmit a signal to the server requesting a reservation including at least one of purchasing the dye and dyeing using the dye.

The dispenser may receive reservation information including the simulation ID from a server, or to receive input of the simulation ID.

### [Advantageous Effects]

According to an embodiment of the present disclosure, since a simulation ID is generated and output when a simulation is performed, there is an advantage in that management of the performed simulation becomes easy, and the user can easily be provided with desired cosmetics by simply sharing the simulation ID with an expert.

According to an embodiment of the present disclosure, although the cosmetics provided diverse depending on the simulation, information on shops that can provide the cosmetics is output, there is an advantage in that it becomes easy to provide cosmetics according to the simulation to the user.

According to an embodiment of the present disclosure, there is an advantage in that the efficiency of simulation management is improved through a simulation ID that is almost uniquely generated.

### [Description of Drawings]

FIG. 1 is a block diagram of a cosmetics providing system according to an embodiment of the present disclosure.
FIG. 2 is a perspective view of a dispenser according to an embodiment of the present disclosure.
FIG. 3 is a diagram illustrating the interior of a dispenser according to an embodiment of the present disclosure.
FIG. 4 is a control block diagram of a dispenser according to an embodiment of the present disclosure.
FIG. 5 is a control block diagram of a mobile terminal according to an embodiment of the present disclosure.
FIG. 6 is a ladder diagram illustrating an operation method of a cosmetics providing system according to an embodiment of the present disclosure.
FIG. 7 is an exemplary diagram illustrating a method of registering a mobile terminal as a customer terminal or an expert terminal according to an embodiment of the present disclosure.
FIG. 8 is an exemplary diagram illustrating a screen for inputting information for performing dyeing simulation by a mobile terminal according to an embodiment of the present disclosure.
FIG. 9 is an exemplary drawing showing a screen in which a mobile terminal outputs a message related to dyeing simulation according to an embodiment of the present disclosure.
FIG. 10 is an exemplary drawing showing a screen in which a mobile terminal outputs a dyeing simulation result according to an embodiment of the present disclosure.
FIG. 11 is an exemplary drawing showing a screen in which a mobile terminal outputs a simulation ID according to an embodiment of the present disclosure.
FIG. 12 is an exemplary drawing showing information shared through a simulation ID sharing icon by a mobile terminal according to an embodiment of the present disclosure.
FIG. 13 is an exemplary drawing for explaining a method for a mobile terminal to provide shop information when a shop search icon is selected according to an embodiment of the present disclosure.
FIG. 14 is an exemplary drawing showing a screen in which a mobile terminal displays information on a selected shop according to an embodiment of the present disclosure.
FIG. 15 is an exemplary drawing for explaining a method for a mobile terminal to receive a shop reservation command according to an embodiment of the present disclosure.
FIG. 16 is an example drawing of a home screen displayed on an expert terminal according to an embodiment of the present disclosure.
FIG. 17 is an example drawing of a screen displayed when the simulation load button illustrated in Fig. 16 is selected.
FIG. 18 is an example drawing of a screen that outputs information corresponding to a simulation ID on an expert terminal according to an embodiment of the present disclosure.

### [Best Mode]

Hereinafter, the embodiments disclosed in this specification will be described in detail with reference to the attached drawings. Regardless of the drawing symbols, identical or similar components will be given the same reference numbers and redundant descriptions thereof will be omitted.

The suffixes "module" and "part" used for components in the following description are given or used interchangeably only for the convenience of writing the specification, and do not have distinct meanings or roles in themselves.

In addition, when describing the embodiments disclosed in this specification, if it is determined that a specific description of a related known technology may obscure the gist of the embodiments disclosed in this specification, the detailed description thereof will be omitted. In addition, the attached drawings are only intended to facilitate easy understanding of the embodiments disclosed in this specification, and the technical ideas disclosed in this specification are not limited by the attached drawings, and should be understood to include all modifications, equivalents, and substitutes included in the technical scope of the present disclosure.

Terms including ordinal numbers such as first, second, etc. may be used to describe various components, but the components are not limited by the terms. The terms are used only for the purpose of distinguishing one component from another.

The singular expression includes the plural expression unless the context clearly indicates otherwise.

In this application, the terms "comprises" or "has" should be understood to indicate the presence of a feature, number, step, operation, component, part, or combination thereof described in the specification, but not to preclude the possibility of the presence or addition of one or more other features, numbers, steps, operations, components, parts, or combinations thereof.

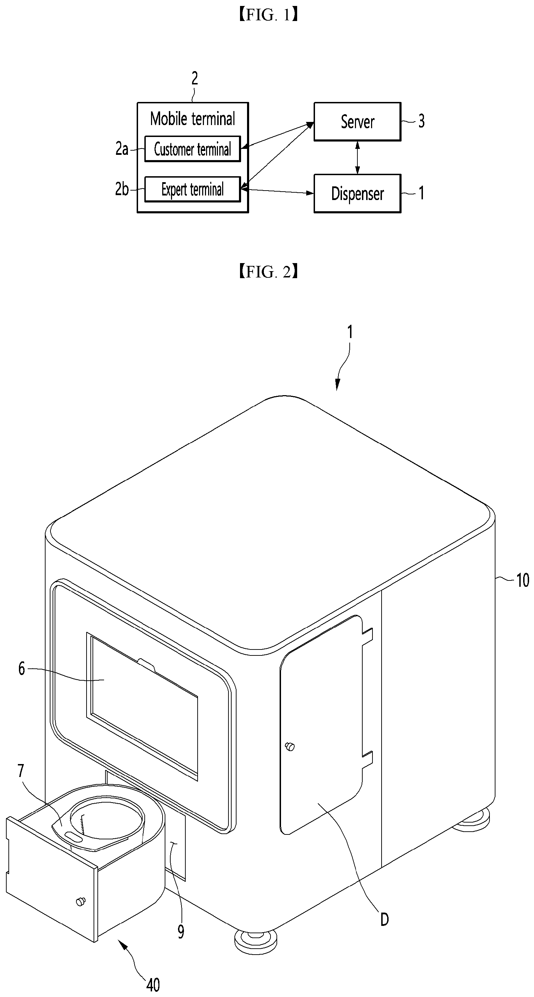

FIG. 1 is a block diagram of a cosmetics providing system according to an embodiment of the present disclosure.

A cosmetics providing system according to an embodiment of the present disclosure may include at least some or all of a dispenser 1, a mobile terminal 2, and a server 3. Each of the dispenser 1, the mobile terminal 2, and the server 3 may communicate with each other by wire or wirelessly to transmit and receive signals.

The dispenser 1 includes a plurality of compositions, and may discharge at least one composition upon receiving a manufacturing command to provide cosmetics.

Here, the composition may refer to an ingredient used in manufacturing cosmetics, such as foundation, dye, etc. The composition may include raw materials, compounds, etc. used in manufacturing cosmetics.

A cosmetic may refer to a manufactured product provided by discharging at least one composition.

For example, if the dispenser 1 is a device that provides dye, the composition may refer to a dyeing material. The dyeing material may include both chemical components and natural components, and may include an oxidation dye expressing a color, a natural dye, an oxidizing agent, an alkaline agent, and an auxiliary component for protecting hair. For example, the oxidation dye may include paraphenylene diamine expressing a black color, paratrilene diamine expressing a dark brown color, and mononitrol phenylene diamine expressing a red color. The oxidizing agent may include hydrogen peroxide, urea peroxide, sodium perborate, and the like, and the alkaline agent may include ammonia, a surfactant, monoethanolamine, and the like.

In addition, the dyeing material may include an acid dye, a basic dye, an HC dye, a direct dye, and a bleaching agent.

The composition may be a compound in which two or more chemical components are mixed, a compound in which two or more natural components are mixed, or a compound in which one or more chemical components and one or more natural components are mixed.

The cosmetics are provided by discharging at least one of the above-described compositions suitable for use on the user's skin or hair, and may be manufactured by discharging any one of a plurality of compositions, or by discharging two or more of the plurality of compositions.

The mobile terminal 2 is a device capable of wired/wireless communication and equipped with a display and an input unit, and may include a mobile terminal such as a smart phone, a smart watch, a tablet, a personal computer (PC), etc., but this is only an example and is not limited thereto.

The mobile terminal 2 may include a customer terminal 2a and an expert terminal 2b. Even if it is the same mobile terminal 2, it may be classified as a customer terminal 2a or an expert terminal 2b depending on the user.

According to one embodiment, if a user registered in the dyeing simulation application installed in the mobile terminal 2 is a customer, the corresponding mobile terminal 2 may be customer terminal 2a, and if a user registered in the dyeing simulation application installed in mobile terminal 2 is an expert, the corresponding mobile terminal 2 may be expert terminal 2b.

Here, the customer may refer to a user who wants to dye using the dye provided by dispenser 1, and the expert may refer to a user who receives the dye from the dispenser 1 and performs the dyeing procedure on the customer.

According to another embodiment, the mobile terminal 2 connected to dispenser 1 via short-range wireless communication may be the expert terminal 2b, and the mobile terminal 2 not connected to the dispenser 1 via short-range wireless communication may be the customer terminal 2a. Accordingly, the mobile terminal 2 that is disconnected from dispenser 1 may be determined as customer terminal 2a. In this way, if customer terminal 2a and expert terminal 2b are distinguished based on whether they are connected to the dispenser 1, there is an advantage in that the security of customer information is strengthened.

The server 3 can communicate with the dispenser 1 and the mobile terminal 2, respectively. The server 3 may store various data related to dyeing simulation, dye manufacturing, and dye provision.

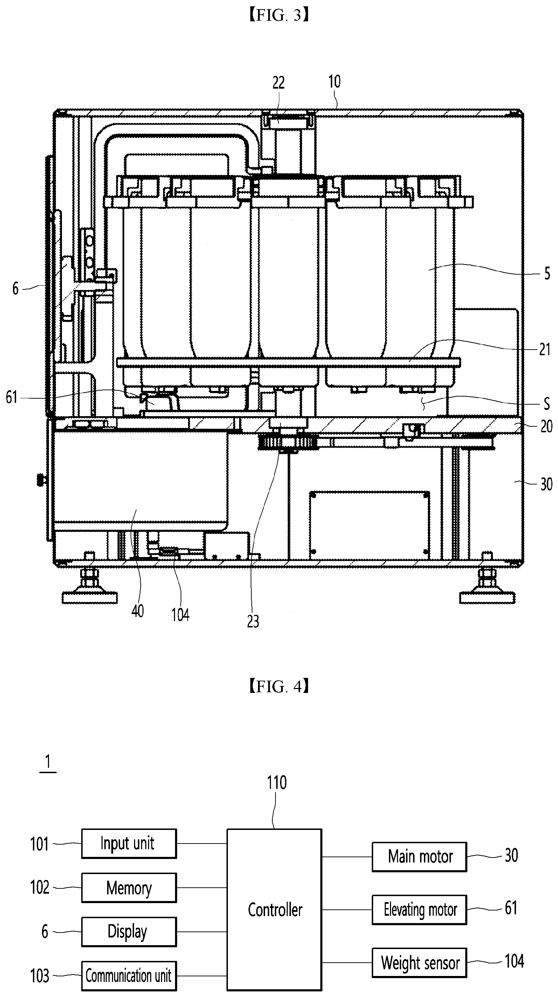

FIG. 2 is a perspective view of a dispenser according to an embodiment of the present disclosure, and FIG. 3 is a drawing illustrating the interior of a dispenser according to an embodiment of the present disclosure.

The dispenser 1 may include at least a part or all of a housing 10, a plurality of cartridges 5 arranged inside the housing 10 and containing a composition, a main body 20 in which the plurality of cartridges 5 are rotatably arranged, a main motor 30 that rotates the plurality of cartridges 5, an elevating motor 61 that is driven when the composition contained in the plurality of cartridges 5 is discharged, and a receiving body 40 in which a cosmetic manufactured with the composition discharged from at least one of the plurality of cartridges 5 is provided.

The housing 10 may protect components contained inside the dispenser 1. A plurality of cartridges 5, a main body 20, a main motor 30, an elevating motor 61, and a receiving body 40 may be disposed inside the dispenser 1.

The housing 10 may be a hexahedral shape having a space formed inside. Preferably, it may be a rectangular parallelepiped shape or a hexahedral shape each having a square face, but this is only an example and is not limited thereto.

The display 6 may be formed on the front surface of the housing 10. The display 6 may display various information related to the provision of cosmetics.

In addition, the receiving body 40 may be mounted or detached from the housing 10 through the front surface of the housing 10. The receiving body 40 may be detached from the housing 10.

A replacement door D may be formed on the housing 10. The replacement door D may be formed on any one of the rear surface (the surface opposite the front surface), the side surface, or the upper surface of the housing 10.

The replacement door D may be opened and closed when at least one cartridge 5 accommodated inside the housing 10 is replaced.

The cross-sectional area of the replacement door D may be larger than the cross-sectional area of one cartridge 5. Accordingly, each of the plurality of cartridges 5 can pass through the replacement door D, and the user can easily replace the cartridge 5 through the replacement door D.

The shape of the housing 10 illustrated in the drawing is only exemplary and is not limited thereto.

An accommodating body space 9 in which a receiving body 40 is placed may be formed in the housing 10. The receiving body 40 may be mounted to the housing 10 by being placed in the accommodating body space 9, or may be detached from the housing 10 by being separated from the accommodating body space 9. The accommodating body space 9 may be a passage through which a cosmetic product made of a composition discharged from a plurality of cartridges 5 is provided to the outside.

A user may place the receiving body 40 inside the housing 10 or remove it to the outside through the accommodating body space 9.

A basket 7 in which a composition discharged from a plurality of cartridges 5 is accommodated may be placed in the receiving body 40.

The basket 7 may be placed inside the receiving body 40 or may be separated from the receiving body 40.

In this case, there is an advantage that the user can easily receive cosmetics through the basket 7 and can easily wash the receiving body 40 separated from the housing 10.

Meanwhile, in FIGS. 2 and 3, the accommodating body space 9 and the display 6 are shown as being formed on the same surface of the housing 10, but depending on the embodiment, the accommodating body space 9 and the display 6 may each be formed on different surfaces of the housing 10.

As shown in FIG. 3, inside the housing 10, a plurality of cartridges 5, a mounting body 21 on which each of the plurality of cartridges 5 is mounted, a support body 22 supporting the mounting body 21, a main body 20 supporting at least one of the mounting body 21 and the support body 22, a main motor 30 rotating the mounting body 21, an elevating body (not shown) that elevates so that a composition is discharged from one of the plurality of cartridges 5, and an elevating motor 61 that drives the elevating body (not shown), etc. may be arranged.

The mounting body 21 has a circular outer circumference, and a plurality of cartridges 5 may be mounted. A plurality of cartridges 5 may be mounted in the mounting body 21 so as to be replaceable. A plurality of mounting holes (not shown) in which each of the plurality of cartridges 5 is mounted may be formed spaced apart along a circular shape in the mounting body 21. A plurality of cartridges 5 may be arranged to penetrate each of the plurality of mounting holes (not shown). In particular, a plurality of cartridges 5 may be arranged such that an actuator (not shown) penetrates each of the plurality of mounting holes (not shown) and faces downward.

The support body 22 may support the mounting body 21. The support body 22 may support the power transfer shaft 23 formed at the center of the mounting body 21.

The power transfer shaft 23 may be arranged such that one end is connected to the main motor 30 and positioned at the center of the mounting body 21.

A part of the power transfer shaft 23 may be arranged to penetrate the center hole (not shown) formed at the center of the mounting body 21. The power transfer shaft 23 may transmit the power of the main motor 30 to the mounting body 21. Therefore, the mounting body 21 rotates by driving the main motor 30, and accordingly, the plurality of cartridges 5 may rotate.

The main body 20 can support at least one of the mounting body 21 and the support body 22. In addition, the main body 20 can support the elevating body (not shown) and the elevating motor 61. In addition, the main body 20 can support the pedestal (not shown) described later.

In addition, a plurality of fixed members (not shown) can be formed in the mounting body 21. Each of the plurality of fixed members (not shown) can fix each of the plurality of cartridges 5.

Meanwhile, the dispenser 1 is arranged below the mounting body 21 and can further include a pedestal (not shown) that accommodates some of the compositions accommodated in the plurality of cartridges 5. That is, the pedestal (not shown) can be arranged in a separated space S between the plurality of cartridges 5 and the main body 20. The pedestal (not shown) can be supported by the main body 20. The pedestal (not shown) can receive the composition discharged from the plurality of cartridges 5. In particular, the pedestal (not shown) can receive the remaining composition that is not received in the basket 7 and hangs at the outlet (not shown) and falls down.

The pedestal (not shown) can be arranged at a position vertically overlapping the plurality of cartridges 5. However, the pedestal (not shown) may not be arranged at a position vertically overlapping the basket 7. This is because the composition discharged from the cartridge 5 arranged at a position vertically overlapping the basket 7 must be received in the basket 7, not the pedestal 25.

In addition, a receiving body 40 may be arranged inside the housing 10, and a weight sensor 104 may be installed under the arrangement space of the receiving body 40. When the receiving body 40 is mounted on the housing 10, the weight sensor 104 may detect the weight of the basket 7 arranged inside the receiving body 40.

The dispenser 1 may further include a controller (110, see FIG. 4) that controls the main motor 30 and the elevating motor 61 so that a composition is discharged from at least one of a plurality of cartridges 5 according to a cosmetic manufacturing method.

The controller 110 may be arranged inside the housing 10 adjacent to the display 6, but this is merely exemplary, and the controller 110 may be arranged at any location within the housing 10.

The controller 110 may receive cosmetic-related information from the communication unit (103, see FIG. 4) described below, or input cosmetic-related information from the display 6 configured as a touch panel, and calculate a cosmetic manufacturing method.

The cosmetic manufacturing method may include information on the type of composition to be discharged and information on the amount of the composition to be discharged.

For example, if the dispenser 1 is a device that provides a dye, the controller 110 may receive or input information related to the dye and calculate the dye manufacturing method. The cosmetic manufacturing method may include a dye manufacturing method. In this specification, cosmetics may be a concept including a dye.

The controller 110 may control the main motor 30 and the elevating motor 61 so that the composition is discharged in a determined amount from at least one cartridge 5 according to the cosmetic manufacturing method.

The main motor 30 generates driving power, and the driving power generated from the main motor 30 is transmitted to the mounting body 21 through the power transfer shaft 23, so that the mounting body 21 can rotate. The controller 110 can control the main motor 30 to position the cartridge 5 containing the composition to be discharged in the discharging area.

Here, the discharging area can mean a position where the cartridge 5 containing the composition to be discharged is arranged in a vertical direction side by side with the basket 7.

When the composition to be discharged is positioned in the discharging area, the controller 110 can control the discharging amount of the composition by controlling the elevating motor 61.

The controller 110 can control at least one of the elevating height and the elevating speed of the elevating body (not shown) through the elevating motor 61 to control the discharging amount of the composition.

FIG. 4 is a control block diagram of a dispenser according to an embodiment of the present disclosure.

The dispenser 1 may include at least some or all of the input unit 101, the memory 102, the display 6, the communication unit 103, the main motor 30, the elevating motor 61, the weight sensor 104, and the controller 110.

The input unit 101 may receive various input commands related to manufacturing cosmetics. For example, the input unit 101 may receive at least one of an input command for initializing the dispenser 1, an input command for manually setting the cosmetics to be manufactured, an input command for checking/replacing the remaining amount of the cartridge, an input command for checking the weight of the cosmetics, and an input command for checking the user history. However, this is merely exemplary, and the input unit 101 may receive various input commands related to manufacturing cosmetics.

In addition, the input unit 101 may receive an input command for selecting a target color, etc. That is, the input unit 101 of dispenser 1 may directly receive an input command received through the input unit 201 provided in terminal 2. Conversely, the input unit 201 of terminal 2 may receive an input command received through the input unit 101 provided in dispenser 1.

The input unit mentioned below may mean at least one of the input unit 101 of dispenser 1 and the input unit 201 of terminal 2.

The memory 102 may store various information related to the manufacturing of cosmetics.

Specifically, the memory 102 may store a cosmetics manufacturing database.

Here, the cosmetics manufacturing database may mean a cosmetics manufacturing algorithm that calculates the composition ratio, etc. for causing the current color to develop into the target color, a cosmetics manufacturing formula, etc.

A cosmetic manufacturing method can be derived based on a cosmetic manufacturing database, and the cosmetic manufacturing method can include information on the types and weights of compositions discharged from a plurality of cartridges 5 mounted on dispenser 1.

The controller 110 can derive a cosmetic manufacturing method based on the cosmetic manufacturing database. The controller 110 can derive a cosmetic manufacturing method including, based on the cosmetic manufacturing database, types of compositions to be included in cosmetics to be used on skin or hair, component ratios of compositions when there are multiple types of compositions, weight information of the total cosmetic, etc. The controller 110 can obtain types of compositions and component ratios of compositions through a cosmetic manufacturing algorithm or a cosmetic manufacturing formula. The controller 110 can also receive weight information of the cosmetic through an input unit.

The display 6 can display various information related to cosmetic manufacturing, such as the status of the dispenser 1, the status of the cartridge 5, and cosmetic information.

The communication unit 103 can transmit and receive signals with at least one of the server 3 and the terminal 2. For example, the communication unit 103 can receive current color information of skin or hair from the server 3 and target color information from the terminal 2. In addition, the communication unit 103 can transmit information on cosmetics that can be manufactured based on the composition mounted on the dispenser 1 to the terminal 2, so that the terminal 2 can display a simulation.

The main motor 30 can rotate the mounting body 21 equipped with a plurality of cartridges 5. The main motor 30 can rotate the mounting body 21 so that the cartridge containing the discharged composition is positioned in the discharging area.

The controller 110 can control the main motor 30 so that the cartridge containing the discharged composition according to the cosmetic manufacturing method is positioned in the discharging area, and can control the elevating motor 61 so that the amount of the composition determined in the cosmetic manufacturing method is discharged from the cartridge located in the discharging area.

The controller 110 can control the main motor 30 so that, when there are multiple compositions to be discharged, each of the multiple cartridges is sequentially positioned in the discharging area.

The elevating motor 61 can elevate or lower the elevating body (not shown) so that the composition is discharged from the cartridge located in the discharging area. When the elevating body (not shown) rises, the elevating body (not shown) pressurizes the actuator 54 of the cartridge 5 located in the discharging area so that the composition contained in the cartridge 5 can be discharged. When the elevating body (not shown) descends, the pressure that the elevating body (not shown) applies to the actuator 52 decreases, so that the amount of the composition discharged to the cartridge 5 decreases, and when the elevating body (not shown) is separated from the actuator 52, the discharge of the composition can be stopped.

The controller 110 can control the elevating motor 61 according to weight information included in the cosmetic manufacturing method. For example, if the cosmetic manufacturing method includes information for mixing 10 g of the first composition included in the first cartridge and 10 g of the second composition included in the second cartridge, the controller 110 can control the elevating motor 61 to discharge 10 g of the first composition after positioning the first cartridge in the discharging area through the main motor 30, and can control the elevating motor 61 to discharge 10 g of the second composition after positioning the second cartridge in the discharging area.

The controller 110 can calculate the amount of the composition discharged in the discharging area through the weight sensor 104. The weight sensor 104 can be provided under the accommodating body space 9.

The weight sensor 104 can measure the weight of the basket 7 placed on the receiving body 40. The basket 7 may include a composition discharged from the cartridge 5. The controller 110 may calculate the weight of the composition discharged from each cartridge 5 based on the weight change that occurs as the composition is discharged. For example, if the weight measured by weight sensor 104 before the composition is discharged is A(g), the weight measured by weight sensor 104 after the first composition is discharged is B(g), and the weight measured by weight sensor 104 after the second composition is discharged is C(g), the controller 110 may calculate the weight of the basket 7 as A(g), calculate the weight of the discharged first composition by the operation of (B-A)(g), and calculate the weight of the discharged second composition by the operation of (C-B-A)(g).

The controller 110 may control the overall operation of the dispenser 1. The controller 110 can control at least some or all of the input unit 101, the memory 102, the display 6, the communication unit 103, the main motor 30, the elevating motor 61, the weight sensor 104, and the controller 110.

According to one embodiment, the controller 110 receives current color information from the server 3, receives target color information from the terminal 2, calculates a cosmetic manufacturing method for causing skin or hair to develop from the current color to the target color, and discharges a composition included in a plurality of cartridges 5 according to the calculated cosmetic manufacturing method to provide the cosmetic.

For example, the controller 110 can calculate a cosmetic manufacturing method for mixing the first composition and the second composition in the ratio of A:B when the current color is the first color and the target color is the second color. The controller 110 can calculate a cosmetic manufacturing method in which the first composition and the third composition are mixed in the ratio of C:D when the current color is the first color and the target color is the third color. The controller 110 can calculate a cosmetic manufacturing method in which the second composition, the fourth composition, and the fifth composition are mixed in the ratio of E:F:G when the current color is the fourth color and the target color is the second color. That is, the type and weight of the composition used in the cosmetic manufacturing may be different depending on the current color and the target color. The type of the composition used in the cosmetic manufacturing may be various, and only one composition may be used or two or more compositions may be used.

According to the first embodiment, the total amount of the composition to be discharged may be determined in advance. In this case, the controller 110 can calculate the amount of the composition to be discharged according to the component ratio based on the preset total amount. For example, if the total amount of cosmetics is set to 100 g and a method for manufacturing cosmetics is calculated in which the first composition and the second composition are mixed in a ratio of 4:6, the controller 110 can control the first composition to be discharged in an amount of 40 g and the second composition to be discharged in an amount of 60 g.

According to the second embodiment, the total amount of the composition to be discharged can vary depending on the length of the user's hair. In this case, the controller 110 can calculate the total amount of the composition to be discharged based on the length of the user's hair, and calculate the amount of each composition to be discharged based on the mixing ratio of the compositions based on the calculated total amount. For example, assuming that a cosmetic manufacturing method is produced by mixing the first composition and the second composition in a ratio of 1:4, if the user's hair length is a bob length, the controller 110 calculates the total amount of the composition as 50 g and controls the first composition to be dispensed at 10 g and the second composition at 40 g, and if the user's hair length is shoulder length, the controller 110 calculates the total amount of the composition as 100 g and controls the first composition to be dispensed at 20 g and the second composition at 80 g.

The user's hair length can be input through the input unit. The input unit can input the user's hair length as a numerical value. For example, the input unit can input the user's hair length as a numerical value such as 5 cm, 10 cm, etc. Alternatively, the input unit can input the user's hair length as a location where the hair falls, such as behind the ear, shoulder, chest, or waist.

In addition, the dispenser 1 can further include a camera module (not shown). The camera module can capture a user and output it to the display 6.

According to an embodiment, the camera module may be a microscope camera. The microscope camera can capture images with a magnification of about 20 to 500 times. In this case, it is possible to provide the user with a clearer image of the skin condition, scalp condition, and hair condition.

The camera module may also have a Bayer filter. The Bayer filter can divide each signal received through the image sensor into R, G, and B channels, and synthesize the three channels in an additive mixing manner to generate a color image. In this case, it is possible to provide the user with a clearer view of the color change according to the use of cosmetics.

The camera module may be formed integrally with the dispenser 1. Alternatively, the camera module may be provided separately from the dispenser 1, and the camera module may be connected to the dispenser 1 by wire or wirelessly.

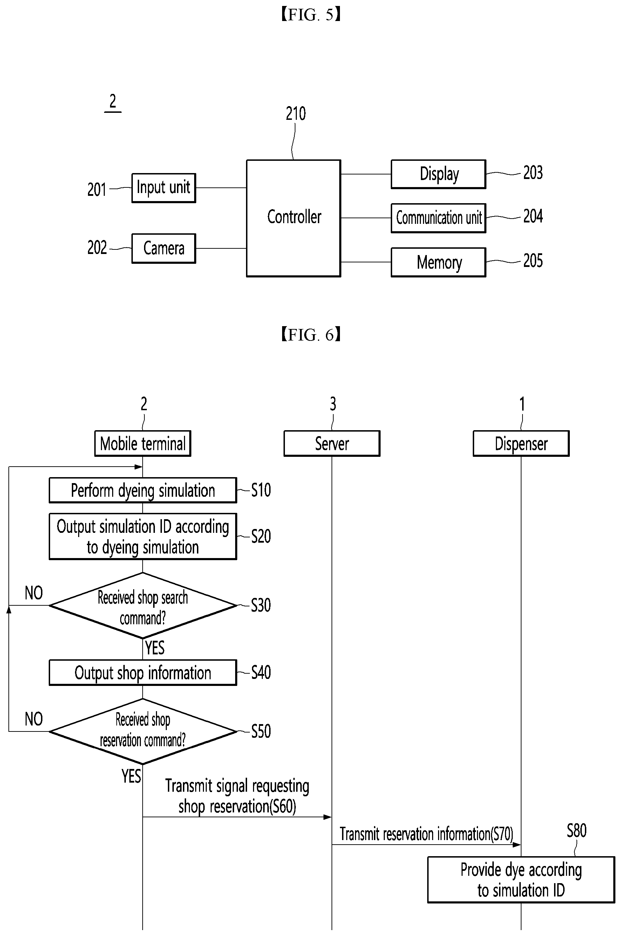

FIG. 5 is a control block diagram of a mobile terminal according to an embodiment of the present disclosure.

The mobile terminal 2 may include at least some or all of an input unit 201, a camera 202, a display 203, a communication unit 204, a memory 205, and a controller 210.

The mobile terminal 2 may be a smart phone, but this is only an example, and may include a wearable device such as a smart watch, a tablet PC, a laptop, a desktop, etc.

The input unit 201 may receive an input command from a user. The input command may include at least one piece of information. For example, the input unit 201 may receive an input command for selecting a target color. Or, the input unit 201 may receive a command for selecting a hair length. However, this is only an example, and the input unit 201 can receive input commands to output various information such as the user's recent dyeing period, current condition of hair, etc.

The input unit 201 may be formed by a touch screen, etc., or may include physical key buttons.

The camera 202 can capture a user. The camera 202 can capture a face image of the user so that the user's skin or hair is included.

The face image captured by the camera 202 can be used for simulation.

In addition, the face image captured by the camera 202 can also be used to determine the current color of the user's skin or hair.

The display 203 can display various information related to the manufacturing of cosmetics.

For example, the display 203 can display at least one sample color to select a target color, display a recommended color, display information on ingredients of the cosmetics to be manufactured, information on price of the cosmetics to be manufactured, a simulation image, etc.

The communication unit 204 can transmit and receive signals from at least one of the server 3 and the dispenser 1.

For example, the communication unit 204 can transmit and receive signals from a separate server 3 that stores a database related to cosmetics.

The communication unit 204 can transmit information acquired through the input unit 201, the camera 202, etc., information stored in memory 205, etc. to the outside. In addition, the communication unit 204 can receive various information from the outside. For example, the communication unit 204 can receive information related to cosmetics to be manufactured from the dispenser 1.

The memory 205 can store various information related to users, cosmetics, etc. For example, the memory 205 can store the user's cosmetics usage history. Or, the memory 205 can store information on the ingredients of cosmetics, etc.

Here, the cosmetics usage history may include information on the ingredients of the cosmetics used (e.g., type of composition, weight of composition), skin condition information, accuracy of color development, hair color before dyeing at the time when the user dyed, target hair color, hair color after dyeing, and hair condition information.

Here, the accuracy of color development is an indicator indicating the accuracy of the actual color developed compared to the target color, and may indicate the degree of consistency between the target color and the actual color developed. The hair condition information may include hair damage, dryness, etc.

When storing the cosmetics usage history, the memory 205 may store the cosmetics usage history by dividing it by customer or by expert (by designer).

The memory 205 may store the cosmetics usage history by customer. Here, the customer may mean the user who is intended to use cosmetics. The memory 205 may store the cosmetics usage history for the first customer, the cosmetics usage history for the second customer, ... , the cosmetics usage history of the Nth customer.

The memory 205 can store the cosmetics usage history by expert (designer). Here, the expert (designer) can mean a user who dyed hair using a dye. In other words, the expert (designer) can mean a user who dyed someone else's hair using a dye. The memory 205 can store the cosmetics usage history for the first expert (designer), the cosmetics usage history for the second expert (designer), ..., the cosmetics usage history for the Nth expert (designer).

In this way, if the cosmetics usage history is stored by expert, there is an advantage in that the cosmetics usage amount by the expert can be easily calculated. For example, if multiple designers use the dispenser 1 together, the amount of cosmetics and the price of the cosmetics, etc. used by each expert, can be calculated based on the cosmetics usage history stored by expert. During the same period, if the amount of cosmetics used by the first expert is 1 kg and the amount of cosmetics used by the second expert is 2 kg, the first expert and the second expert can share the cosmetics cost 1:2.

The cosmetics usage history can be stored in at least one of the server 3, the mobile terminal 2, and the dispenser 1.

The controller 210 can control the overall operation of the mobile terminal 2. The controller 210 can control at least one of the input unit 201, the camera 202, the display 203, the communication unit 204, and the memory 205.

FIG. 6 is a ladder diagram illustrating an operation method of a cosmetics providing system according to an embodiment of the present disclosure.

The mobile terminal 2 can perform a dyeing simulation (S10).

In FIG. 6, the mobile terminal 2 can be a customer terminal 2a. However, this means that it is easy to understand the method illustrated in FIG. 6 from the perspective of the customer terminal 2a. That is, this cannot be seen as meaning that the expert terminal 2b is excluded. The expert terminal 2b can also perform the method illustrated in FIG. 6.

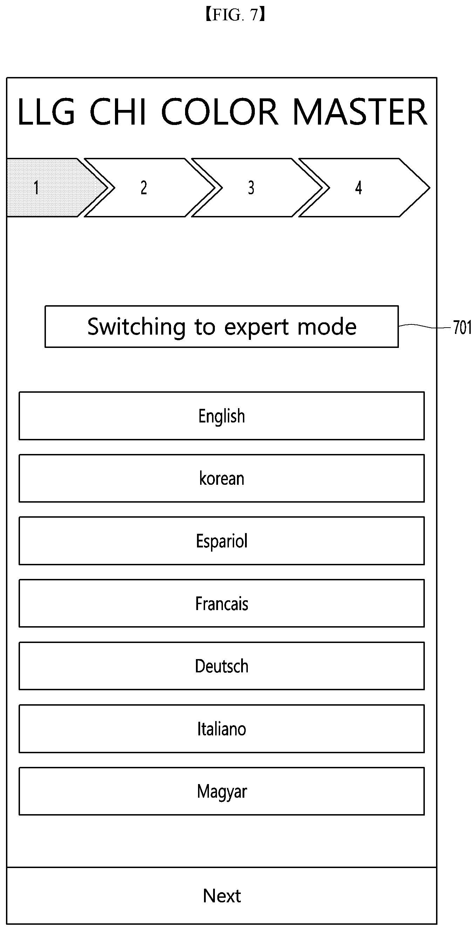

FIG. 7 is an exemplary drawing for explaining a method in which a mobile terminal is registered as a customer terminal or an expert terminal according to an embodiment of the present disclosure.

An application for dyeing simulation may be installed on the mobile terminal 2. The application may display a screen for user registration. The screen for user registration may include an icon 701 for switching to expert mode. As in the example of FIG. 7, the controller 210 may display an icon 701 for switching to expert mode on the screen for user registration.

If user registration is completed without selecting the icon 701 for switching to expert mode, the controller 210 may determine the mobile terminal 2 of the corresponding user as the customer mobile terminal 2a. The controller 210 can determine the mobile terminal 2 of the user as the expert mobile terminal 2b when user registration is completed by selecting icon 701 for switching to the expert mode.

Meanwhile, the screen for user registration can include a screen for entering various user information such as name, date of birth, address, etc. as well as language selection as shown in FIG. 7.

Again, FIG. 6 will be described.

The mobile terminal 2 can perform dyeing simulation for the registered user.

The dyeing simulation can be an operation for predicting the appearance of the user's hair dyed with a specific color.

The mobile terminal 2 can obtain a user image through the camera 202, etc., and receive selection of a specific color through the input unit 201. The controller 210 can generate a dyeing simulation that predicts the appearance of the user's hair dyed with the selected specific color in the user's image, and output the dyeing simulation through the display 203.

When the mobile terminal 2 performs dyeing simulation, it can output the dyeing simulation result through the display 203.

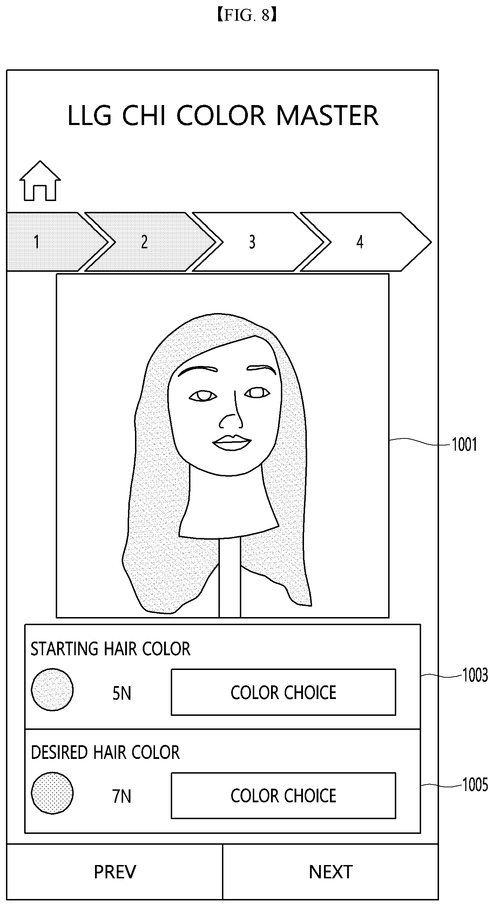

Referring to FIGS. 8 to 10, a method for a mobile terminal according to an embodiment of the present disclosure to perform dyeing simulation is described.

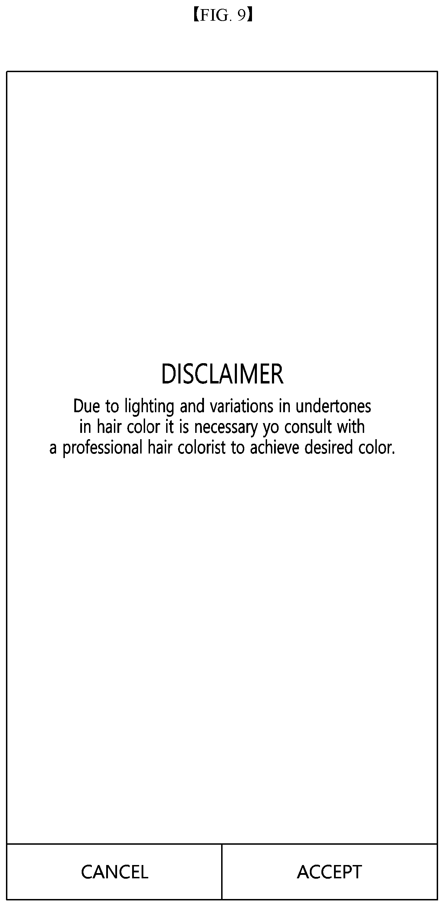

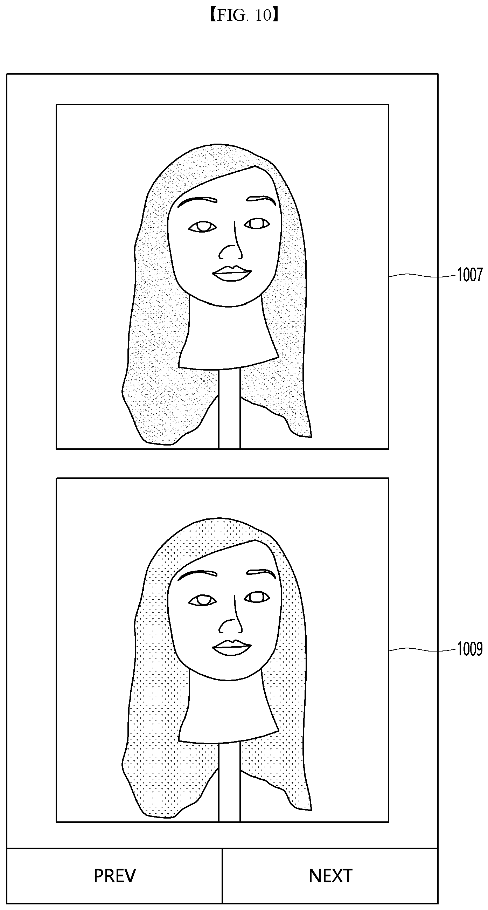

FIG. 8 is an exemplary diagram illustrating a screen for inputting information for performing dyeing simulation by a mobile terminal according to an embodiment of the present disclosure, FIG. 9 is an exemplary drawing showing a screen in which a mobile terminal outputs a message related to dyeing simulation according to an embodiment of the present disclosure, FIG. 10 is an exemplary drawing showing a screen in which a mobile terminal outputs a dyeing simulation result according to an embodiment of the present disclosure.

The mobile terminal 2 can obtain a user image that is a target of dyeing simulation and output it to the display 203.

The controller 210 can output information on current color 1003 of the user's hair. The controller 210 can obtain information on current color 1003 based on the user image. Alternatively, the controller 210 can obtain information on current color 1003 through the input unit 201.

In addition, the controller 210 can output information on target color 1005 that the user wants to dye. The controller 210 can output information on target color 1005 when the target color is selected through the input unit 201. The controller 210 can display multiple sample colors, and when a command to select one of the displayed sample colors is received, the selected sample color can be recognized as the target color. The selected color among the sample colors can be the target color.

When the user image, the information on current color 1003, and the information on target color 1005 are determined, the controller 210 can generate a dyeing simulation.

Meanwhile, the controller 210 can determine whether the dyeing simulation can be generated based on the image information of the user image 1001. For example, the controller 210 can determine that the dyeing simulation cannot be generated when the image information such as brightness and resolution of the user image is outside the preset reference range. In this way, the controller 210 can output a message as illustrated in FIG. 9 when the user image is not suitable for generating the dyeing simulation.

The controller 210 can generate a dyeing simulation based on the user image, the information on current color 1003, and the information on target color 1005 when the user image is suitable for generating a dyeing simulation. The controller 210 can perform a dyeing simulation according to the current color and the target color.

As in the example of FIG. 10, the controller 210 can output a dyeing simulation result. The dyeing simulation result can include a dyeing simulation image 1009 that shows a predicted appearance when the user image is dyed with the target color. In addition, the controller 210 can additionally display an image before dyeing 1007 when displaying the dyeing simulation image 1009, and the image before dyeing 1007 can be the same as the user image of FIG. 8.

Again, FIG. 6 is described.

In addition, when the mobile terminal 2 performs a dyeing simulation, it can output a simulation ID according to the dyeing simulation (S20).

That is, when the mobile terminal 2 performs the dyeing simulation, it can output not only the dyeing simulation result but also the simulation ID corresponding to the performed dyeing simulation.

The mobile terminal 2 can generate and output a simulation ID corresponding to each dyeing simulation whenever it performs the dyeing simulation.

According to one embodiment, the controller 210 can generate a simulation ID using a globally unique identifier (GUID). For example, when the controller 210 performs the dyeing simulation, it can generate a GUID and generate a simulation ID by combining the first 3 characters and the last 3 characters of the generated GUID. As a specific example, when the controller 210 performs the dyeing simulation, if the generated GUID is {49F504E0-4F89-11D3-9A0C0305E82C3B3E}, it can generate the simulation ID as 49FB3E. The GUID itself is generated as a nearly unique value, and the simulation ID is generated by combining characters in the preset positions of the GUID, which has the advantage of minimizing the problem of duplication of simulation IDs.

However, the above-described method is only an example, and mobile terminal 2 can generate and output simulation IDs in various ways.

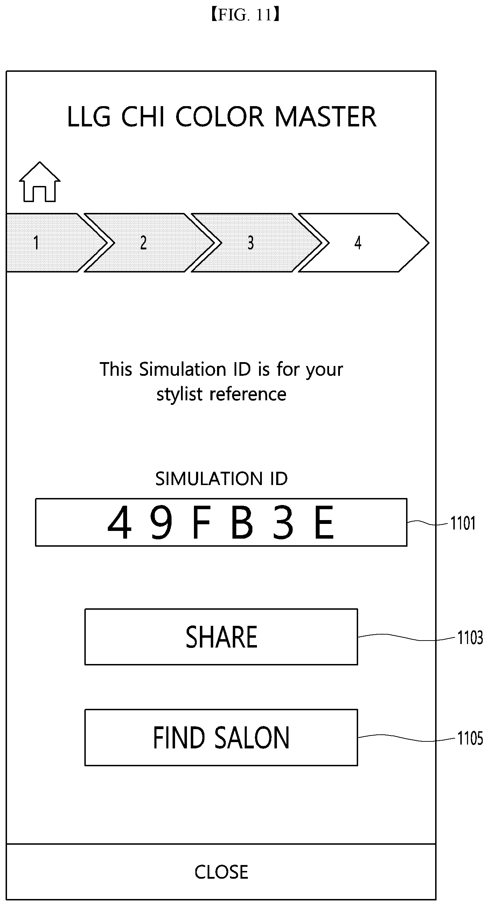

FIG. 11 is an example drawing showing a screen in which a mobile terminal according to an embodiment of the present disclosure outputs a simulation ID.

As in the example shown in FIG. 11, the controller 210 can output a simulation ID 1101 through the display 203.

According to an embodiment, the controller 210 can further display at least one of the icon 1103 for sharing the simulation ID and the icon 1105 for finding a shop.

In the present specification, a shop may include a salon that provides a dyeing service using a dye, a store that sells only dyes, etc.

When the controller 210 receives a selection command for the icon 1103 for sharing the simulation ID, it can upload the simulation ID and information related to the simulation ID to SNS or provide a path for transmitting it to an individual through a messenger, etc.

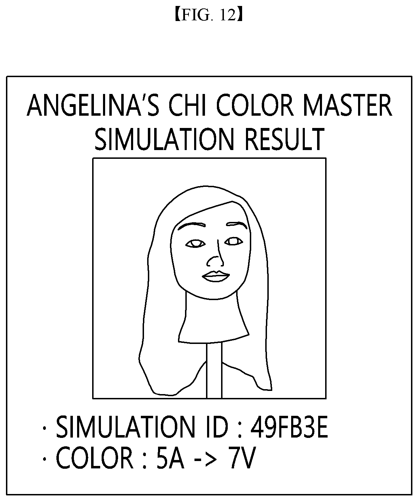

FIG. 12 is an exemplary drawing showing information shared through a simulation ID sharing icon by a mobile terminal according to an embodiment of the present disclosure.

When a simulation ID is shared through an SNS messenger, etc., at least some or all of the dyeing simulation image, simulation ID, and color information may be shared as illustrated in FIG. 12.

Meanwhile, the controller 210 may transmit at least some or all of the dyeing simulation image, simulation ID, and color information to the expert terminal 2b through the simulation ID sharing icon.

Again, FIG. 6 will be described.

The controller 210 may determine whether a shop search command has been received (S30).

That is, the controller 210 may obtain whether a shop search command has been received. When the shop search icon 1105 described in FIG. 11 is selected, the controller 210 may determine that a shop search command has been received.

If the controller 210 determines that a shop search command has been received, the controller 210 can output shop information (S40).

In particular, if the controller 210 receives a shop search command, the controller 210 can display shop information including at least one shop capable of providing a dye corresponding to the simulation ID on the display 203. The controller 210 can receive an input for selecting a shop to receive the dye from the shop information.

The number of shops output as shop information may be one or multiple.

According to one embodiment, the controller 210 can arbitrarily list shops that provide a dye corresponding to the simulation ID and display them on the display 203.

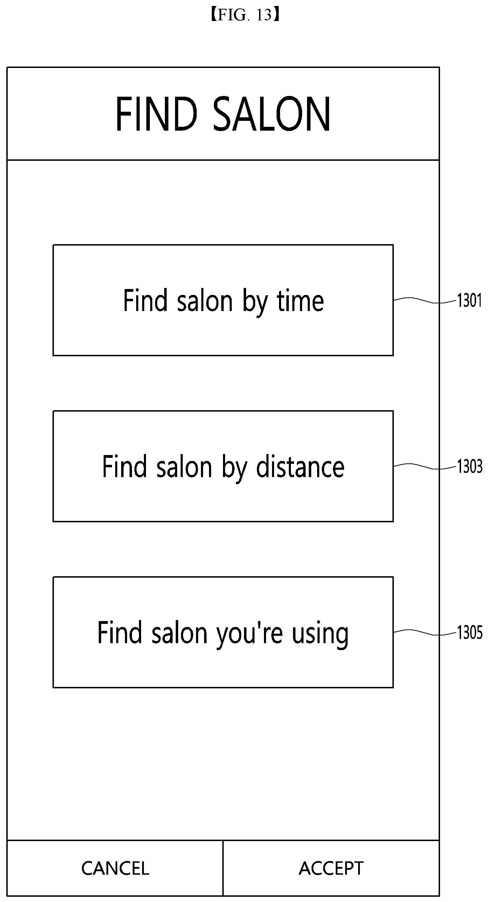

According to another embodiment, the controller 210 can list shops that provide a dye corresponding to the simulation ID based on various criteria and display them on the display 203, and this will be described with reference to FIG. 13.

FIG. 13 is an exemplary drawing for explaining a method for a mobile terminal to provide shop information when a shop search icon is selected according to an embodiment of the present disclosure.

When the controller 210 receives a shop search command, it may display at least one of the first shop search icon 1301 for outputting a shop searched in a first order, the second shop search icon 1303 for outputting a shop searched in a second order, and the third shop search icon 1305 for outputting a shop searched in a third order. Here, the first order may be the time required to provide a dye, the second order may be the distance, and the third order may be the number of times a user uses the dye.

Here, the time required to provide a dye may be calculated based on at least one of the inventory status of dyeing materials for providing a dye at each shop and the reservation status ate each shop. The distance may be calculated as the distance to the shop based on the location of the mobile terminal 2.

For example, when the first shop search icon 1301 is selected, the controller 210 may display a list of shops that are listed in order of the shortest time required to provide a dye corresponding to the simulation ID, when the second shop search icon 1303 is selected, the controller 210 may display a list of shops that can provide a dye corresponding to the simulation ID in order of distance, and when the third shop search icon 1305 is selected, the controller 210 may display a list of shops that can provide a dye corresponding to the simulation ID in order of the number of times the user has used the dye.

Meanwhile, the shop information may be received from the server 3. The server 3 may store shop information for all shops equipped with the dispenser 1. In addition, the server 3 may periodically receive and update information on cartridges equipped in the dispenser 1 equipped in each shop from all shops. The information on the cartridge may include the type and remaining amount of the composition equipped in the cartridge. Accordingly, the server 3 can determine whether the dye corresponding to the simulation ID can be provided based on the current cartridge information of the dispenser 1 equipped in each shop. In addition, if the server 3 cannot immediately provide the dye corresponding to the simulation ID based on the current cartridge information of the dispenser 1, the server 3 can calculate the time when the dye corresponding to the simulation ID can be provided using the information of the cartridge scheduled to be delivered to each shop. In addition, the server 3 can calculate the time when the dye corresponding to the simulation ID can be provided by further considering the status of the service reserved for each shop.

When a shop is selected through one of the first to third shop search icons 1301 1303 1305, the controller 210 can display information about the selected shop.

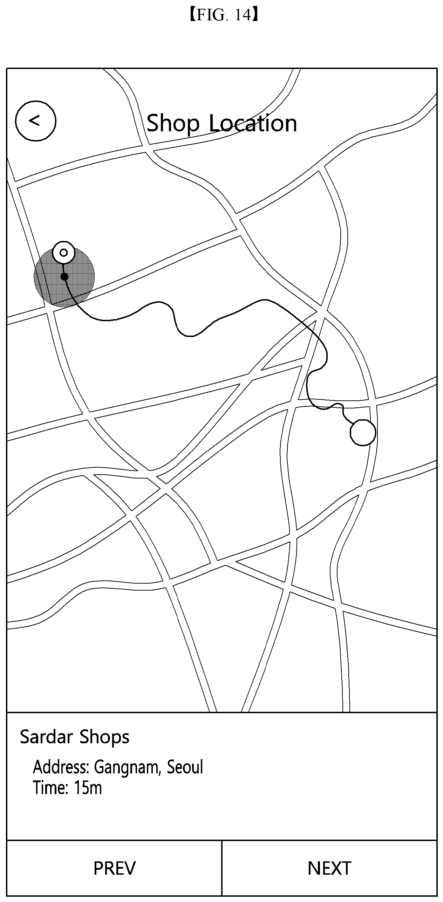

FIG. 14 is an exemplary drawing showing a screen in which a mobile terminal displays information on a selected shop according to an embodiment of the present disclosure.

When a shop is selected through one of the first to third shop search icons 1301 1303 1305, the controller 210 can display information of the selected shop. Referring to the example of FIG. 14, the selected shop information can include at least one of a map, a moving route, an address, and a moving time for the selected shop. In addition, the selected shop information can further include information about an expert working at the selected shop.

In addition, when a shop is selected through one of the first to third shop search icons 1301 1303 1305, the controller 210 can output a URL corresponding to the selected shop. For example, the URL may be https://chi.com/colormaster?location=(@36.6675129,128.4037232,15.04z&simulationid=49F B3E&startingcolor=5n&desiredcolor=8v&code=p5n8v2x1. The URL may include at least one of the shop location information, simulation ID information, color information, and dye code information. For example, the shop location information may be @36.6675129,128.4037232,15.04z, the simulation ID information may be 49FB3E, the current color information may be 5n, the target color information may be 8v, and the dye code information may be p5n8v2x1, but this is only an example and is not limited thereto. Meanwhile, the dye code information may indicate a manufacturing method of the dye to be manufactured in the dispenser 1.

The user can decide whether to confirm the selected shop as a shop to receive the dye corresponding to the simulation ID through the information about the selected shop.

For example, when the previous button (PREV) is selected while the controller 210 is displaying the selected shop information, the controller 210 can display a list of shops that can provide the dye corresponding to the simulation ID again. When the next button (NEXT) is selected while the selected shop information is displayed, the controller 210 can select the selected shop as a shop to receive the dye.

Again, FIG. 6 is described.

When a shop to receive the dye is confirmed, the controller 210 can obtain whether a shop reservation command has been received (S50).

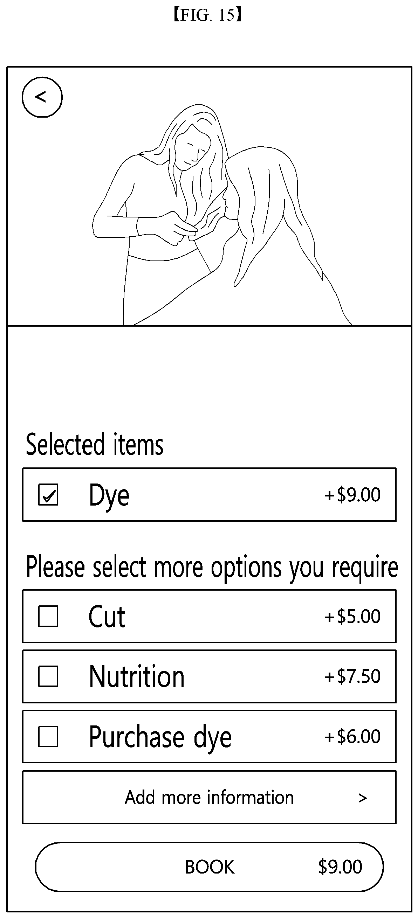

FIG. 15 is an exemplary drawing for explaining a method for a mobile terminal to receive a shop reservation command according to an embodiment of the present disclosure.

When a shop to receive a dye is confirmed, the controller 210 can display a shop reservation screen such as the example of FIG. 15.

The controller 210 can display at least one service item available in the confirmed shop, and can receive a shop reservation command by receiving selection of at least one of the displayed service items.

Referring to the example of FIG. 15, the controller 210 can display a dyeing item, a cut item, a nutrition item, and a dye purchase item as service items available in the confirmed shop on the display 203. The controller 210 can receive a shop reservation command by receiving selection of at least one of the displayed service items and selection of a reservation button (BOOK).

Again, FIG. 6 is explained.

When the controller 210 receives a shop reservation command, it can transmit a signal requesting a shop reservation to the server 3 (S60).

The server 3 can receive a signal requesting a shop reservation from the mobile terminal 2. When the server 3 receives a signal requesting a shop reservation from the mobile terminal 2, it can store reservation information according to the shop reservation request signal.

The server 3 can transmit the reservation information to the dispenser 1 (S70).

The reservation information can include at least one of dye-providing shop information and simulation ID confirmed by the user.

The server 3 can transmit the reservation information to the dispenser 1 equipped in a shop corresponding to the reservation information based on the shop information included in the reservation information.

The dispenser 1 can receive the reservation information from the server 3.

When the dispenser 1 receives the reservation information from the server 3, it can provide a dye according to the simulation ID included in the reservation information (S80).

The dispenser 1 can receive the reservation information including a simulation ID from the server 3, or can directly receive an input of a simulation ID.

The dispenser 1 can store the reservation information received from the server 3, and provide a dye according to the reservation information. The dispenser 1 can provide a dye for dyeing hair from a current color to a target color as in a simulation, based on the simulation ID.

According to one embodiment, the dispenser 1 can provide a dye based on a visit time information when the reservation information includes the customer's visit time information.

According to another embodiment, the dispenser 1 can store the reservation information, and provide a dye when receiving a dye provision command.

On the other hand, unlike as shown in FIG. 6, the server 3 may transmit the reservation information to the mobile terminal 2, specifically the expert terminal 2b, not the dispenser 1. Alternatively, the server 3 may transmit the reservation information to both the dispenser 1 and the expert terminal 2b. That is, when the server 3 receives a signal requesting a reservation, it may transmit the reservation information to at least one of the dispenser 1 and the expert terminal 2b.

When the expert terminal 2b receives the reservation information, it may output a reception alarm of the reservation information.

When the expert terminal 2b receives the reservation information, it may store the received reservation information.

When the expert terminal 2b receives the reservation information, it may transmit the received reservation information to the dispenser 1, which is connected to the expert terminal 2b via wired or wireless communication.

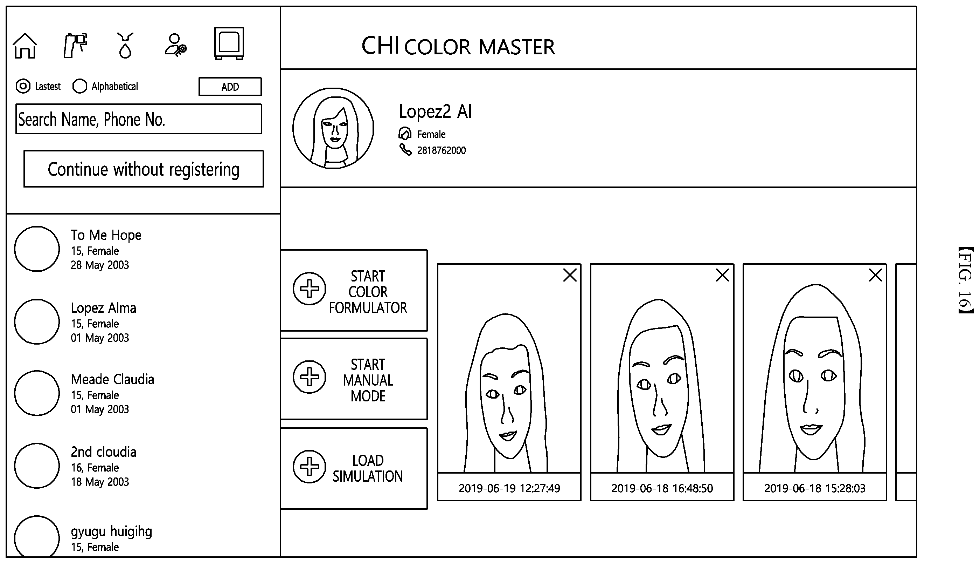

Next, FIGS. 16 to 18 are examples of screens displayed on an expert terminal according to an embodiment of the present disclosure. FIGS. 16 to 18 may be examples of screens displayed when the expert terminal 2b is a tablet PC.

FIG. 16 is an example drawing of a home screen displayed on an expert terminal according to an embodiment of the present disclosure.

The expert terminal 2b may display a search window, a customer list, a dye manufacturing start button (START COLOR FORMULATOR), a manual mode start button (START MANUAL MODE), a simulation load button (LOAD SIMULATION), and a simulation history, etc. on the home screen.

The search window may receive input information for searching for a customer.

The customer list may include customer items that have been treated by an expert corresponding to the expert terminal 2b.

The dye manufacturing start button or the manual mode start button may be buttons for performing simulation or color mixing right in the shop.

The simulation load button may be a button for outputting dyeing information corresponding to the simulation ID.

The simulation history may include simulations performed or outputted in the expert terminal 2b.

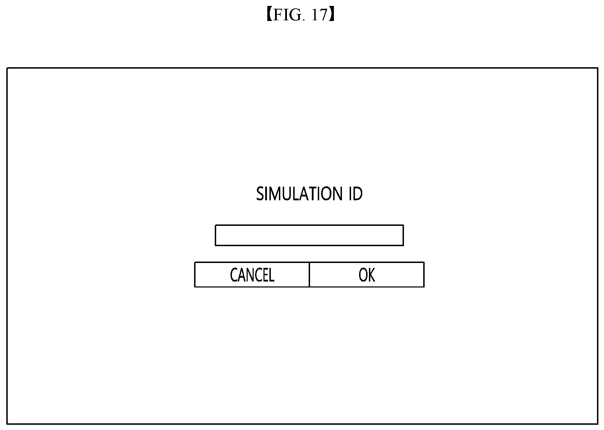

FIG. 17 is an example drawing of a screen displayed when the simulation load button illustrated in Fig. 16 is selected.

As illustrated in FIG. 17, when the simulation load button is selected, the controller 210 may display a screen for receiving a simulation ID. When a simulation ID is input in the screen for receiving a simulation ID, information corresponding to the simulation ID may be output.

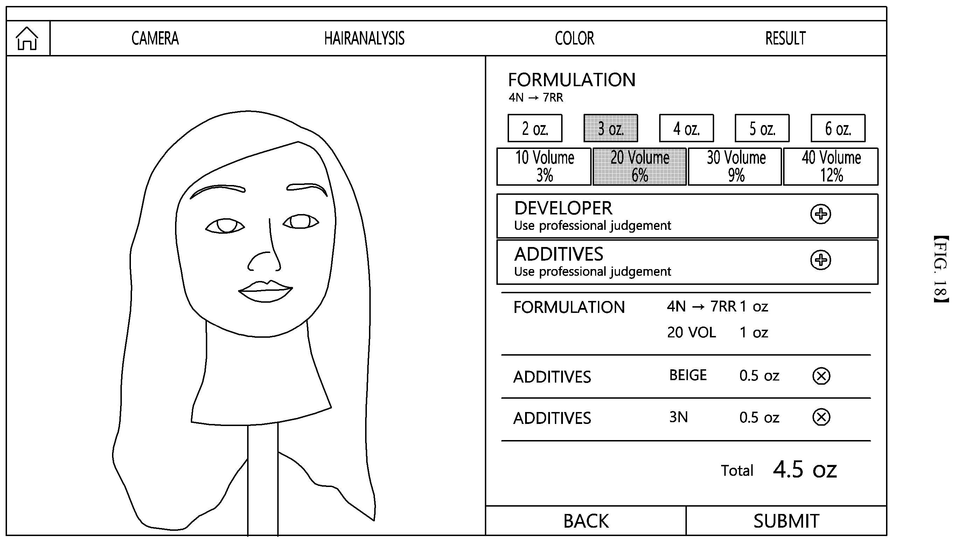

FIG. 18 is an example drawing of a screen that outputs information corresponding to a simulation ID on an expert terminal according to an embodiment of the present disclosure.

As illustrated in FIG. 18, when a simulation ID is input, the controller 210 may display a screen including a dyeing simulation image, color information, and dyeing information corresponding to the simulation ID on the display 203.

The dyeing simulation image corresponding to the simulation ID may be the dyeing simulation image 1009 described in FIG. 10. According to an embodiment, the controller 210 may further display the pre-dyeing image together with the dyeing simulation image.

The color information may include the current color and target color of the simulation corresponding to the simulation ID.

The dye information may include a manufacturing method of a dye for deriving the same dyeing result as the simulation corresponding to the simulation ID, and the manufacturing method may include information on the type of the composition to be discharged and information on the amount of the composition to be discharged.

Meanwhile, the controller 210 may output information corresponding to the simulation ID as the simulation ID is input, and may receive a command to modify at least a part of the dyeing information corresponding to the output simulation ID.

Accordingly, the expert may modify at least a part of the dyeing manufacturing method according to the customer's situation, needs, etc. after confirming the information corresponding to the simulation ID. The controller 210 can modify a manufacturing method of a dye corresponding to a simulation ID when at least a part of the dye information corresponding to the simulation ID is modified, and can transmit a request for manufacturing a dye to the dispenser 1 so that the dye is manufactured according to the modified dye manufacturing method.

The above description is merely an example of the technical idea of the present disclosure, and those skilled in the art to which the present disclosure belongs can make various modifications and variations without departing from the essential characteristics of the present disclosure.

Therefore, the embodiments disclosed in the present disclosure are not intended to limit the technical idea of the present disclosure but to explain it, and the scope of the technical idea of the present disclosure is not limited by these embodiments.

The protection scope of the present disclosure should be interpreted by the following claims, and all technical ideas within the equivalent scope should be interpreted as being included in the scope of the rights of the present disclosure.

### [Industrial Applicability]

The cosmetics providing system according to the present disclosure has the effect of providing cosmetics corresponding to simulation more conveniently to users, and therefore has remarkable industrial applicability.

## Claims

1. A cosmetics providing system, comprising:
a mobile terminal configured to perform a dyeing simulation according to a current color and a target color and output a simulation ID corresponding to the performed dyeing simulation; and
a dispenser configured to provide a dye for dyeing hair from the current color to the target color based on the simulation ID.

2. The cosmetics providing system of claim 1, wherein the mobile terminal is configured to:
output shop information including at least one shop capable of providing a dye corresponding to the simulation ID, and
receive an input for selecting a shop to receive the dye from the shop information.

3. The cosmetics providing system of claim 2, wherein the mobile terminal is configured to:
output a shop list as the shop information, and the shop list is listed in order of time required to provide the dye corresponding to the simulation ID.

4. The cosmetics providing system of claim 3, wherein the time required to provide the dye is calculated based on at least one of stock status of dyeing materials for providing the dye and reservation status of a shop.

5. The cosmetics providing system of claim 2, wherein the mobile terminal is configured to:
output a shop list as the shop information, and the shop list is listed in order of proximity based on location of the mobile terminal.

6. The cosmetics providing system of claim 2, wherein the mobile terminal is configured to:
output a shop list as the shop information, and the shop list is listed in order of the number of times a user corresponding to the mobile terminal has used each shop.

7. The cosmetics providing system of claim 2, further comprising a server,
wherein the mobile terminal is configured to transmit a signal requesting a reservation to a selected shop to the server upon receiving an input for selecting a shop, and
the server is configured to receive the signal requesting the reservation.

8. The cosmetics providing system of claim 7, wherein the server is configured to transmit reservation information to at least one of the dispenser and the mobile terminal used by an expert when receiving the signal requesting the reservation.

9. The cosmetics providing system of claim 7, wherein the mobile terminal is configured to transmit a signal to the server requesting a reservation including at least one of purchasing the dye and dyeing using the dye.

10. The cosmetics providing system of claim 1, wherein the dispenser is configured to receive reservation information including the simulation ID from a server, or to receive input of the simulation ID.

11. A mobile terminal, comprising:
a communication unit that is connected to a server and a dispenser;
a display configured to output a dyeing simulation; and
a controller configured to control the communication unit and the display,
wherein the controller is configured to:
when the dyeing simulation request is received, acquire a user image, current color information of a user's hair, and dyeing target color information,
control the display to output the dyeing simulation based on the user image, the current color information of the user's hair, and the dyeing target color information, and
generate a simulation ID corresponding to a generated dyeing simulation.

12. The mobile terminal of claim 11, wherein the controller is configured to:
obtain current color information of the user's hair based on the user image, and
obtain target color information of the user's hair based on a user input selecting one of a plurality of sample colors.

13. The mobile terminal of claim 11, wherein the controller is configured to:
determine whether generation of the dyeing simulation is appropriate based on the user image, the current color information of the user's hair, and the dyeing target color information, and
control the display to output a dyeing simulation inappropriate message if the generation of the dyeing simulation is determined to be inappropriate as a result of the determination.

14. The mobile terminal of claim 11, wherein the controller is configured to:
control the communication unit to transmit the generated simulation ID to the server when a shop information request is received.

15. The mobile terminal of claim 14, wherein the controller is configured to:
control the display to output shop information including at least one shop capable of providing a dye corresponding to the simulation ID when receiving shop information from the server, and
receive an input for selecting a shop to receive the dye from the shop information.

16. The mobile terminal of claim 15, wherein the controller is configured to:
control the communication unit to transmit a signal requesting a reservation to the selected shop to the server when receiving the input for selecting the shop.

17. The mobile terminal of claim 11, wherein the controller is configured to:
when reservation information including the simulation ID is received from the server, store the reservation information, and
control the communication unit to transmit the reservation information including the simulation ID to the dispenser.

18. The mobile terminal of claim 17, wherein the controller is configured to:
control the display so that when a simulation ID corresponding to the reservation information is input, a dyeing simulation image corresponding to the simulation ID, hair color information, and hair dye information are output to the display.

19. The mobile terminal of claim 18, wherein the controller is configured to:
control the communication unit to transmit a dye manufacturing request corresponding to the determined hair dye information to the dispenser when the hair dye information is determined.

20. A dispenser, comprising:
a communication unit that is connected to the mobile terminal and the server;
a dye supply unit that supplies dye contained in a plurality of cartridges; and
a controller configured to control the dye supply unit,
wherein the controller is configured to:
when receiving reservation information including a simulation ID corresponding to a dyeing simulation from at least one of the mobile terminal and the server, control the dye supply unit to supply dye for dyeing hair from a current color to a target color based on the simulation ID.
